# EUROPEAN PATENT APPLICATION

(11) **EP 4 361 970 A1**
(43) Date of publication of application: **01.05.2024**
(21) Application number: 22204245.9
(22) Date of filing: 27.10.2022
(51) Int. Cl.: G06V 20/69

(54) **METHOD AND SYSTEM FOR CONSTRUCTING A DIGITAL IMAGE DEPICTING A FOCUSED SAMPLE**

(71) Applicant: CellaVision AB, 223 62 Lund (SE)
(72) Inventor: Almers, Martin, 226 51 Lund (SE); Hedlund, Sven, 247 72 Genarp (SE); Jönsson, Jesper, 223 59 Lund (SE)
(74) Representative: AWA Sweden AB

(57) **Abstract**

The present inventive concept relates to a method (30) and a device (10) for training a machine learning model to construct a digital image depicting a focused sample. The method comprising: acquiring (S300) a training set of digital images of a training sample by: positioning (S302) the training sample, relative to a microscope objective, at a focus position outside a range of positions between a near limit and a far limit of a depth of field of the microscope objective; illuminating (S304), by an illumination system, the training sample with a plurality of illumination patterns, and capturing (S306), for each illumination pattern of the plurality of illumination patterns, a digital image of the training sample; receiving (S308) a ground truth comprising a digital image depicting the training sample being in focus; and training (S310) the machine learning model to construct the digital image depicting a focused sample using the training set of digital images and the ground truth. The present inventive concept further relates to a microscope system (20) and a method (40) for constructing a digital image depicting a focused sample.

## Description

### Technical field

The present inventive concept relates to a method and a device for training a machine learning model to construct a digital image depicting a focused sample. The present inventive concept further relates to a method and a microscope system for constructing a digital image depicting a focused sample.

### Background of the invention

In the field of digital microscopy, a typical task is to find and identify objects within a sample. For instance, within hematology, cytology and pathology, specific cell types may be found and identified in order to establish a diagnose for the patient from which the sample is taken.

There exists different techniques for imaging samples. One of the simplest forms of digital microscopy is bright-field microscopy where the sample is illuminated from below by white light and imaged from above.

However, a drawback with such imaging techniques of today is that the sample needs to be meticulously positioned relative the microscope objective in order to get a focused image. This puts a high demand on the precision of the mechanics of the microscope system, as well as resulting in a time-consuming process.

Hence, there is a need for improvements within the art.

### Summary of the invention

It is an object to, at least partly, mitigate, alleviate, or eliminate one or more of the above-identified deficiencies in the art and disadvantages singly or in any combination and solve at least the above-mentioned problem.

The inventors of the present inventive concept have realized a way of using Fourier ptychographic microscopy, FPM, and machine learning to achieve a simple, accurate, and effective method and microscopy system for depicting an imaged sample in focus, without the need for precisely positioning the sample relative the microscope objective. Hence, a more time effective and a system requiring less precise stages for positioning the sample can be achieved. Further, less precise stages may be less expensive that may, in turn, allow for a less expensive system.

According to a first aspect, a method for training a machine learning model to construct a digital image depicting a focused sample is provided. The method according to the first aspect comprises: acquiring a training set of digital images of a training sample by: positioning the training sample, relative to a microscope objective, at a focus position outside a range of positions between a near limit and a far limit of a depth of field of the microscope objective; illuminating, by an illumination system, the training sample with a plurality of illumination patterns, and capturing, for each illumination pattern of the plurality of illumination patterns, a digital image of the training sample; receiving a ground truth comprising a digital image depicting the training sample being in focus; and training the machine learning model to construct the digital image depicting a focused sample using the training set of digital images and the ground truth.

It should be noted that the training set of digital images may comprise digital images of multiple training samples. Thus, the training set of digital images may comprise one or more sets of digital images for one or more training samples. Each set of digital images may have a corresponding ground truth.

The wording "training" as in "training sample" is herein used to refer to a sample used during training, as opposed to a general sample which the machine learning model is trained to construct a digital image of. The constructed digital image may then depict the general sample in focus. The machine learning model may of course be able to construct a digital image depicting the training sample. The machine learning model may also be able to construct digital images of other samples as well, which may not be part of the training set of digital images. Put differently, the machine learning model may, after training, be able to construct digital images of samples not used for training the machine learning model. Simply "the sample" may be used herein to refer to either the samples used during training or the samples input into the trained machine learning model, depending on the context.

Within the context of this disclosure, the wording "digital image depicting a focused sample" should be construed as a computer-generated digital image of the sample in acceptably sharp focus. This digital image may be similar, or even identical, to a digital image of the sample captured by use of conventional techniques, such as by use of a bright-field microscopy, while the sample is placed in focus (e.g., in best focus) in relation to the microscope. Therefore, the constructed digital image of the sample may replicate a depiction of the sample being in focus, but in an improved way as will be set forth in the following disclosure. In connection, by the wording "focused sample", it is hereby meant that the sample is in focus.

Within the context of this disclosure, the wording "depth of field" of a microscope objective should be construed as a distance between a farthest point and a nearest point from the microscope objective in which an object is in acceptable focus. The "near limit" herein refers to the nearest point of acceptable focus. The "far limit" herein refers to the farthest point of acceptable focus. Thus, when, e.g., the training sample is "in focus", it is herein meant that the training sample, when imaged, was positioned at a focus position within the depth of field of the microscope objective used. By the wording "focus position" it is hereby meant a position along the optical axis of the microscope objective.

Within the context of this disclosure, the wording "ground truth" should be construed as information that is known to be real and/or true. Hence, in this context, since a machine learning model being able to construct a digital image depicting a focused sample is trained using the ground truth and the training set of digital images, the ground truth may represent an actual focused image of the training sample. Such actual focused digital image of the training sample may be captured using conventional techniques, e.g., using bright-field microscopy.

Within the context of this disclosure, the wording "illumination patterns" may be construed as different ways of illuminating the sample by one or more of the plurality of light sources. The different illumination patterns may, e.g., be formed by illuminating the sample from one or more directions of a plurality of directions, and/or by varying the number of light sources of the plurality of light sources that emit light.

It is to be understood that when it is stated "positioning the training sample, relative to a microscope objective at a focus position", it may be the microscope objective that is positioned instead of, or in addition to, the training sample. Hence, the method according to the first aspect may comprise: positioning the microscope objective relative to the training sample such that the training sample is at a focus position outside a range of positions between a near limit and a far limit of a depth of field of the microscope objective.

The machine learning model may be trained to correlate the training set of digital images of the training sample to the ground truth (e.g., the digital image of the focused sample). The machine learning model may be trained iteratively and/or recursively until a difference between an output of the machine learning model (i.e., the constructed digital image depicting the training sample) and the ground truth (i.e., the digital image depicting the focused training sample) is smaller than a predetermined threshold. A smaller difference between the output of the machine learning model and the ground truth may indicate a higher accuracy of the constructed digital image depicting the sample provided by the machine learning model. Put differently, a smaller difference between the output of the machine learning model and the ground truth may indicate that the constructed digital image depicting a sample may to a higher degree replicate a digital image of the focused sample. Hence, preferably, the difference between the output of the machine learning model and the ground truth may be minimized. The machine learning model may be trained to construct digital images of samples for a plurality of different sample types. In such case, the machine learning model may, for each sample type, be trained using a training set of digital images of a training sample of the sample type, and a corresponding ground truth associated with the respective sample type.

By illuminating the training sample with a plurality of illumination patterns and capturing a digital image for each illumination pattern of the plurality of illumination patterns, information regarding finer details of the training sample may be captured than what normally is resolvable by a conventional microscope (i.e., using a conventional microscope illumination such as a bright-field illumination pattern) used to image the training sample. This can be understood as different portions of Fourier space (i.e., the spatial frequency domain) associated with the training sample are imaged for different illumination directions. This technique may be known in the art as Fourier Ptychographic Microscopy, FPM. Further, by illuminating the training sample with a plurality of illumination patterns and capturing a digital image for each of the plurality of illumination patterns, information regarding a refractive index (or a spatial distribution of a refractive index) associated with the training sample may be captured. This can be understood as an effect of refraction of light being dependent on an angle of incident for light illuminating the sample and the refractive index of the training sample. Information regarding the refractive index of the training sample may, in turn, allow phase information (typically referred to as quantitative phase within the art) associated with the sample to be determined. The phase information may, in turn, be used to replicate the training sample at different focus positions. Put differently, even though the training set of digital images are acquired when the training sample is positioned outside the range of positions between a near limit and a far limit of the depth of field of the microscope objective (i.e., the training sample not being in focus), the training set of digital images comprises information that may be used to construct a digital image depicting the training sample being in focus. This, since the training sample is illuminated with the plurality of illumination patterns when the training set is acquired. Hence, since the plurality of digital images comprises information associated with one or more of fine details of the sample, a refractive index associated with the sample, and phase information associated with the sample, this information may be used in the training of the machine learning model, which may, in turn, allow for a machine learning model being trained to more accurately construct the digital image depicting the training sample being in focus than what would be allowed in case the plurality of digital images were captured using a single illumination pattern (e.g., conventional bright-field illumination, conventional dark-field illumination, or from a single direction) or by using conventional microscopy. Using conventional microscopy (e.g., by illuminating the sample from a majority of the plurality of illumination patterns up to a numerical aperture of the microscope objective used to image the training sample), it may be difficult, or even impossible, to capture information associated with the refractive index associated with the training sample and/or phase information associated with the training sample. Put differently, since a digital image captured using conventional microscopy may simultaneously contain information regarding the refraction of light impinging from directions corresponding to overlapping portions of the Fourier space associated with the training sample, it may be impossible using such techniques to determine phase information associated with the training sample and/or information related to the refractive index of the training sample. Put differently, it may not be possible to determine such information related to the training sample using conventional microscopy. Illuminating the training sample with a plurality of illumination patterns may further allow for capturing information relating to details of the sample which are finer than what normally is allowed by a microscope objective used to capture the digital images of the training sample. Thus, a microscope objective having a relatively lower magnification may be used while still being able to capture information related to such fine details of the training sample. Using a relatively lower magnification microscope objective may, in turn, allow for digital images of larger portions of the training sample to be captured at each imaging position. Hence, the entire training sample may be scanned by capturing digital images at relatively fewer positions which, in turn, may allow for a faster scanning of the training sample.

Further, the additional information captured from the training sample allows for the machine learning model to construct the image depicting the sample in focus, despite input images to the machine learning model may be out of focus, or at least not in a best possible focus. This removes the need for a meticulous and time-consuming process of trying to position the training sample such that it is in focus of the microscope objective. It also reduces the mechanical requirements on the microscope system used to position the training sample, since precise focus adjustment are not needed. Further, since the requirements of positioning may be reduced, the time associated with positioning the training sample and/or imaging the training sample may be reduced. Lastly, the need for refocusing when changing training samples can also be removed for the same reason as above.

A resolution of the digital image depicting the training sample being in focus may be relatively higher than a resolution of at least one digital image of the training set of digital images.

In addition to the above, the machine learning model may be trained to construct a digital image depicting the training sample at a higher resolution than what the microscope objective used to capture the training set of digital images is capable of when using conventional microscopy illumination (e.g., bright-field microscopy).

Hence, the present inventive concept may allow for training a machine learning model to construct a digital image replicating a sample in relatively high resolution using a plurality of digital images of the sample in relatively low resolution. Hence, by using the trained machine learning model, a digital image depicting a sample may be constructed without having to use a microscope objective having a relatively high magnification.

Said focus position may be one of a plurality of focus positions, and wherein acquiring the training set of digital images of the training sample may further comprise: positioning the training sample, relative to the microscope objective, at each focus position of the plurality of focus positions, and wherein the acts of illuminating the training sample and capturing a digital image of the training sample may be performed for each focus position of the plurality of focus positions.

By training the machine learning model using digital images depicting the training sample at a plurality of focus positions, the performance of the machine learning model may be improved. For example, a greater flexibility when it comes to which focus position a sample can be positioned at in order to construct, using the trained machine learning model, a digital image of the sample being in focus may be achieved.

At least one focus position of the plurality of focus positions may be inside the range of positions between the near limit and the far limit of the depth of field of the microscope objective.

An associated advantage is that the machine learning model may learn to construct digital images of the sample even if the sample already, at least to some extent, is in focus. Thus, the proposed method may allow any focus position to be used for constructing an in-focus digital image of the sample.

The act of receiving the ground truth may comprise: positioning the training sample, relative to the microscope objective, at a focus position inside the range of positions between the near limit and the far limit of the depth of field of the microscope objective; illuminating the training sample with a bright-field illumination pattern; and capturing, using the microscope objective, the digital image depicting the training sample being in focus while the training sample is illuminated with the bright-field illumination pattern.

The digital images of the training set of digital images may be captured using a first microscope objective. The ground truth may be captured using a second microscope objective. A numerical aperture of the second microscope objective may be higher than a numerical aperture of the first microscope objective. A magnification of the second microscope objective may be higher than a magnification of the first microscope objective.

Herein, the wording "bright-field illumination pattern" refers to an illumination pattern that resembles the illumination used in bright-field microscopy where the sample is imaged from one side when illuminated from an opposite side. Hence, the ground truth may be acquired by bright-field microscopy. The bright-field illumination pattern may, e.g., be formed using a conventional microscopy illumination source.

Having the digital image depicting the training sample in focus (i.e. the ground truth) captured by a microscope objective having a higher numerical aperture than the training set was captured with, the machine learning model may be trained to replicate the sample in a relatively high-resolution image from a set of relatively low-resolution images.

The illumination system may comprise a plurality of light sources, each light source of the plurality of light sources may be configured to illuminate the training sample from one direction of a plurality of directions, and wherein each illumination pattern of the plurality of illumination patterns may be formed by one or more light sources of the plurality of light sources.

The illumination patterns of the plurality of illumination patterns may be formed by turning on (i.e., emitting light from) one or more of the plurality of light sources. Hence, each illumination pattern may be formed by simultaneously illuminating the training sample from one or more directions of the plurality of directions. Each illumination pattern of the plurality of illumination patterns may be formed by simultaneously illuminating the training sample from one or more directions corresponding to non-overlapping portions of a Fourier space associated with the training sample. At least two illumination directions of two different illumination patterns may correspond to overlapping portions of the Fourier space associated with the training sample. The bright-field illumination pattern may be formed by simultaneously illuminating the training sample with a majority of the light emitting diodes of the plurality of light emitting diodes. For instance, the bright-field illumination pattern may be formed by simultaneously illuminating the training sample with all (or almost all) light emitting diodes of the plurality of white light emitting diodes. The bright-field illumination pattern may be formed by simultaneously illuminating the training sample from directions corresponding to, and smaller than, a numerical aperture of the microscope objective used to image the training sample.

A possible associated advantage is that the different illumination patterns may be formed without having to physically move any parts of a device used to capture the images of the training sample, and/or to move the training sample itself.

At least one direction of the plurality of directions may correspond to an angle larger than a numerical aperture of the microscope objective used to acquire the training set of digital images.

The numerical aperture of a microscope objective may be a dimensionless number associated with a range of angles over which the microscope objective accepts light. Hence, a direction larger than the numerical aperture of a microscope objective may be understood as a direction corresponding to an angle larger than the range of angles over which the microscope objective accepts light.

By illuminating the training sample from a direction corresponding to an angle larger than the numerical aperture of a microscope objective, the digital image captured for that angle of illumination may comprise information about higher spatial frequencies of the training sample, and thereby finer details of the training sample, than the microscope objective normally allows (i.e., using conventional microscopy illumination). This may, in turn, allow for the microscope objective to capture phase information associated with the training sample and information relating to details of the training sample not normally being resolvable by the microscope objective, which may be used in the training of the machine learning model. Put differently, by illuminating the training sample from a direction corresponding to an angle larger than the numerical aperture of the microscope objective may allow for an improved training the machine learning model to construct a digital image depicting the focused sample.

Above, advantages and/or advantageous effects have been discussed with reference to the training sample. However, it is to be understood that these advantages and/or effects may be applicable when digital images of samples are used to construct digital images depicting the samples in focus using a machine learning model trained according to the first aspect.

According to a second aspect, a method for constructing a digital image depicting a focused sample is provided. The method according to the second aspect comprises: receiving an input set of digital images of a sample, wherein the input set of digital images is acquired by: positioning the sample, relative to a microscope objective, at a focus position, illuminating, by an illumination system, the sample with a plurality of illumination patterns, and capturing, for each illumination pattern of the plurality of illumination patterns, a digital image of the sample; constructing a digital image depicting a focused sample by: inputting the input set of digital images into a machine learning model being trained according to the method of the first aspect, and receiving, from the machine learning model, an output comprising the constructed digital image depicting the focused sample.

It is to be understood that when it is stated "positioning the sample, relative to a microscope objective at a focus position", it may be the microscope objective that is positioned instead of the sample. Hence, the method according to the second aspect may comprise: positioning the microscope objective relative to the sample such that the sample is at a focus position.

The plurality of illumination patterns used to acquire the input set of digital images may be formed in the same manner as the plurality of illumination patterns used to acquire the training set of digital images used to train the machine learning model. For example, the illumination patterns may have the same directions, same LED positions, same intensities, colors, etc.

By inputting the input set of digital images into a machine learning model trained according to the method of the first aspect, the process of imaging the sample in focus may be more efficient, since a digital image depicting the sample in focus can be output from the trained machine learning model using digital images of the sample which need not to be captured when the sample in focus. In other words, the proposed method allows positioning the sample at a focus position outside or inside the depth of field of the microscope objective to be used. It is further to be understood that the proposed method may allow positioning the sample such that a first portion of the sample is in inside the depth of field and a second portion of the sample is outside the depth of field. For instance, the sample may be tilted compared to the microscope objective, i.e., some portions of the sample is in focus while other portions are not in focus. Thus, a time-consuming process of adjusting a position of the sample relative the microscope objective in order to focus the sample may be avoided.

The act of receiving the input set of digital images of the sample may comprise acquiring the input set of digital images of the sample by: positioning the sample, relative to the microscope objective, at a focus position outside a range of positions between a near limit and a far limit of a depth of field of the microscope objective; illuminating, by an illumination system, the sample with a plurality of illumination patterns, and capturing, for each illumination pattern of the plurality of illumination patterns, a digital image of the sample.

The illumination system may comprise a plurality of light sources, each light source of the plurality of light sources may be configured to illuminate the sample from one direction of a plurality of directions, and wherein each illumination pattern of the plurality of illumination patterns may be formed by one or more light sources of the plurality of light sources.

At least one direction of the plurality of directions may correspond to an angle larger than a numerical aperture of the microscope objective used to acquire the input set of digital images.

The above-mentioned features of the first aspect, when applicable, apply to this second aspect as well. In order to avoid undue repetition, reference is made to the above.

According to a third aspect, a device for training a machine learning model to construct a digital image depicting a focused sample is provided. The device comprises circuitry configured to execute: a first receiving function configured to receive a training set of digital images of a training sample, wherein the training set of digital images of the training sample is acquired by: positioning the training sample, relative to a microscope objective, at a focus position outside a range of positions between a near limit and a far limit of a depth of field of the microscope objective, illuminating, by an illumination system, the training sample with a plurality of illumination patterns, and capturing, for each illumination pattern of the plurality of illumination patterns, a digital image of the training sample; wherein the circuitry is further configured to execute: a second receiving function configured to receive a ground truth comprising a digital image depicting the training sample being in focus; and a training function configured to train the machine learning model to construct the digital image depicting a focused sample using the training set of images and the ground truth. The device for training the machine learning model may be configured to execute the method according to the first aspect.

The above-mentioned features of the first aspect and/or the second aspect, when applicable, apply to this third aspect as well. In order to avoid undue repetition, reference is made to the above.

According to a fourth aspect, a microscope system is provided. The microscope system comprising: an illumination system configured to illuminate a sample with a plurality of illumination patterns; an image sensor configured to capture digital images of the sample; a microscope objective configured to image the sample onto the image sensor; and circuitry configured to execute: an acquisition function configured to acquire an input set of digital images by being configured to: position the sample, relative to the microscope objective, at a focus position, control the illumination system to illuminate the sample with each illumination pattern of the plurality of illumination patterns, and control the image sensor to capture a digital image of the sample for each illumination pattern of the plurality of illumination patterns, and wherein the circuitry is further configured to execute: an image construction function configured to: input the input set of digital images into a machine learning model being trained according to the method of the first aspect, and receive, from the machine learning model, an output comprising the constructed digital image depicting the focused sample.

The illumination system may comprise a plurality of light sources, each light source of the plurality of light sources may be configured to illuminate the sample from one direction of a plurality of directions, and wherein each illumination pattern of the plurality of illumination patterns may be formed by one or more light sources of the plurality of light sources.

At least one direction of the plurality of directions may correspond to an angle larger than a numerical aperture of the microscope objective used to image the sample.

The plurality of light sources may be arranged on a curved surface being concave along at least one direction along the surface.

Arranging the plurality of light sources on a curved surface may be advantageous in that the distance from each light source to a current imaging position (i.e., a position or portion of the sample currently being imaged) of the microscope system may be similar. Since this distance is similar, an intensity of light emitted from each light source may be similar at the current imaging position. This may be understood as an effect of the inverse square law. Thus, the sample may be illuminated by light having similar intensities from each light source, which may, in turn, allow for a more homogenous illumination of the sample independent of illumination direction. It may be advantageous to configure the illumination system such that the distance from each light source to the current imaging position is large enough such that each light source may be treated as a point source. The distance from each light source to the current imaging position may be chosen such that an intensity of light from each light source at the current imaging position is high enough to produce the input set of digital images.

The curved surface may be formed of facets. Put differently, the curved surface may be constructed by a plurality of flat surfaces. Thus, the curved surface may be a piecewise flat surface.

An associated advantage is that the illumination system may be easier to manufacture, thereby reducing associated economic costs.

A further associated advantage is that the illumination system may be modular. It may thereby be easier to replace one or more light sources (e.g., in case they break and/or are defective).

A numerical aperture of the microscope objective may be 0.4 or lower. Put differently, the microscope objective may have a magnification of 20 times or lower.

An associated advantage is that a larger portion of the sample may be imaged at a time compared to a microscope objective having a higher numerical aperture. This may, in turn, allow for a number of individual imaging positions needed to image a majority of the sample to be reduced. Thus, a time needed to image a majority of the sample may thereby be reduced. This may, in particular, be advantageous since the machine learning model may be trained to construct a digital image having a relatively higher resolution than the digital images input to the machine learning model (i.e., the digital images of the input set). Hence, a large portion (or an entirety) of the sample may be imaged more quickly, while the digital image depicting the sample may have a resolution relatively higher than what the microscope objective normally allows (using conventional microscopy illumination).

The above-mentioned features of the first aspect, the second aspect, and/or the third aspect, when applicable, apply to this fourth aspect as well. In order to avoid undue repetition, reference is made to the above.

According to a fifth aspect a non-transitory computer-readable storage medium is provided. The non-transitory computer-readable storage medium comprising program code portions which, when executed on a device having processing capabilities, performs the method according to the second aspect.

The above-mentioned features of the first aspect, the second aspect, the third aspect, and/or the fourth aspect, when applicable, apply to this fifth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead, they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates a device for training a machine learning model.
Figure 2 illustrates a microscope system.
Figure 3 is a block scheme of a method for training a machine learning model to construct a digital image depicting a focused sample.
Figure 4 is a block scheme of a method for constructing a digital image depicting a focused sample using a trained machine learning model.
Figure 5 illustrates an illumination system having a curved surface formed by facets.
Figure 6 illustrates a non-transitory computer-readable storage medium.
Figure 7A illustrates a digital image of a sample.
Figure 7B illustrates a constructed digital image of the sample in focus.
Figure 8 schematically illustrates a depth of field of a microscope objective.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

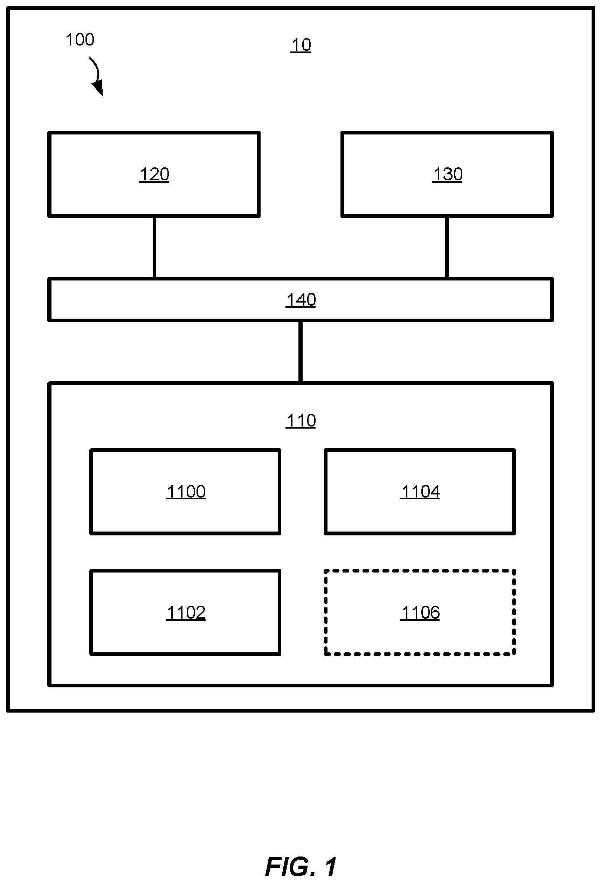

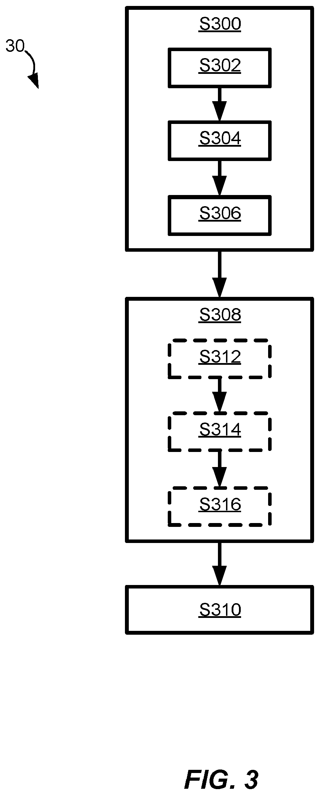

A device 10 and a method 30 for training a machine learning model to construct a digital image depicting a focused sample will now be described with reference to Fig. 1 and Fig. 3.

Figure 1 illustrates, by way of example, a device 10 for training a machine learning model to construct a digital image depicting a focused sample. The device 10 is illustrated in a schematic view. Hence, it should be noted that sizes, shapes and positions of the different elements in the figure are not limiting in any way, but rather merely for illustrative purposes.

The device 10 may be a computing device. Examples of suitable computing devices comprise computers, servers, smartphones, tablets, etc. The device 10 may further be implemented as part of a cloud server and/or a distributed computing arrangement. It is further to be understood that the device 10 may comprise further components, for example input devices (mouse, keyboard, touchscreen, etc.) and/or a display. The device 10 may further comprise a power source, for example a connection to electrical power, a battery, etc. The device 10 comprises circuitry 100. As is illustrated in the example of Fig. 1, the circuitry 100 may comprise one or more of a memory 110, a processing unit 120, a transceiver 130, and a data bus 140. The memory 110, the processing unit 120, and the transceiver 130 may be configured to communicate via the data bus 140. Accompanying control lines and/or address busses between two or more of the memory 110, the processing unit 120 and the transceiver 130 may also be present.

The processing unit 120 may, e.g., comprise one or more of a central processing unit (CPU), a graphical processing unit (GPU), a microcontroller, and a microprocessor. The processing unit 120 may be configured to execute program code stored in the memory 110, in order to carry out functions and operations of the device 10.

The transceiver 130 may be configured to communicate with external devices. The transceiver 130 may transmit data from and receive data to the device 10. For example, the transceiver 130 may be configured to communicate with servers, computer external peripherals (e.g., external storage), etc. The external devices may be local devices or remote devices (e.g., a cloud server). The transceiver 130 may be configured to communicate with the external devices via an external network (e.g., a local-area network, the internet, etc.). The transceiver 130 may be configured for wireless and/or wired communication. Suitable technologies for wireless communication are known to the skilled person. Some non-limiting examples comprise Wi-Fi, Bluetooth, and Near-Field Communication (NFC). Suitable technologies for wired communication are known to the skilled person. Some non-limiting examples comprise USB, Ethernet, and Firewire.

The memory 110 may be a non-transitory computer-readable storage medium. The memory 110 may be a random-access memory. The memory 110 may be a non-volatile memory. The memory 110 may comprise one or more of a buffer, a flash memory, a hard drive, a removable media, a volatile memory, a non-volatile memory, a random-access memory (RAM), and another suitable device. In a typical arrangement, the memory may include a non-volatile memory for long term data storage and a volatile memory that functions as system memory for the device 10. The memory 110 may exchange data within the circuitry 100 over the data bus 140.

As is illustrated in the example of Fig. 1, the memory 110 may store program code portions 1100, 1102, 1104, 1106 corresponding to one or more functions. The program code portions 1100, 1102, 1104, 1106 may be executable by the processing unit 120, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

The circuitry 100 is configured to execute a first receiving function 1100, a second receiving function 1102, and a training function 1104. The circuitry 100 may be configured to execute additional functions.

The first receiving function 1100 is configured to receive a training set of digital images of the training sample. The training set of digital images is formed (has been formed) by positioning the training sample, relative to a microscope objective, at a focus position outside a range of positions between a near limit and a far limit of a depth of field of the microscope objective; illuminating, by an illumination system, the training sample with a plurality of illumination patterns; and capturing, for each illumination pattern of the plurality of illumination patterns, a digital image of the training sample.

The first receiving function 1100 may be configured to receive the training set of digital images via the transceiver 130. For example, the training set of digital images may be captured using an external microscope system and then transmitted to the transceiver 130 of the device 10. As a further example, the device 10 may form part of a microscope system and the training set of digital images may be received from an image sensor of the microscope system. As a yet further example, the trainings set of digital images may be stored on a storage device (e.g., an external or internal storage device) and received from the storage device. The circuitry 100 may be configured to execute an instructing function 1106 configured to transmit instructions, via the transceiver 130, to the microscope system on how to capture the training set of images. The memory 110 may be configured to store the training set of digital images, and the first receiving function 1100 may be configured to receive the training set of digital images from the memory 110.

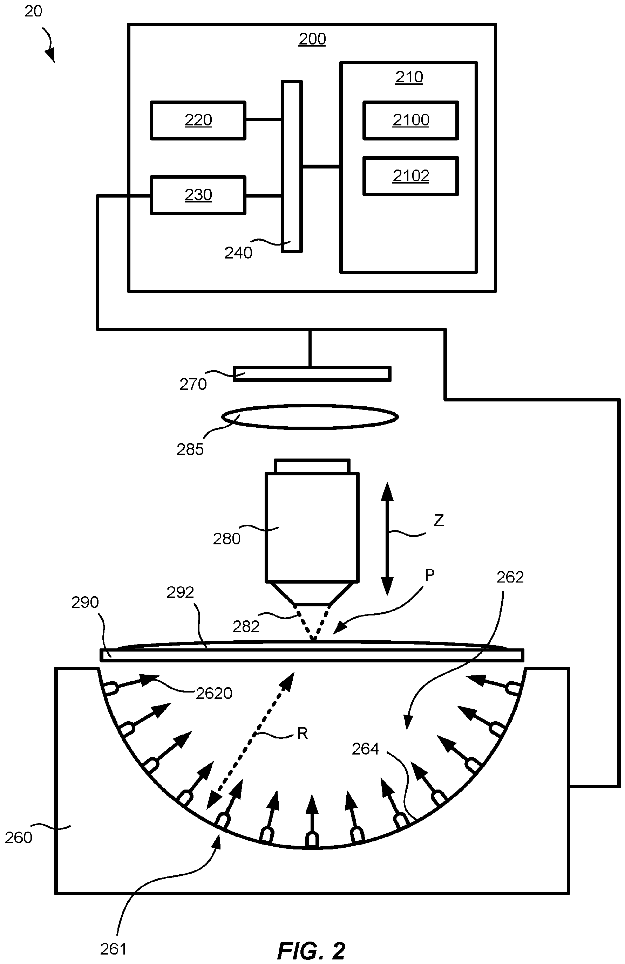

The training set of digital images may be acquired (or captured) using a first microscope objective and an image sensor. For example, the training set of digital images may be acquired using the microscope system 20 as will be further described below in connection with Fig. 2. The training sample may be positioned, relative the first microscope objective at a focus position and sequentially illuminated, by the illumination system, with each illumination pattern of the plurality of illumination patterns. Each digital image of the training set of digital images may be captured when the training sample is illuminated with an illumination pattern of the plurality of illumination patterns. The focus position may be a position, relative the first microscope objective, outside the range of positions between the near limit and the far limit of the depth of field of the first microscope objective. The receiving function 1100 may be configured to acquire the training set of digital images according to the above.

The focus position may be one of a plurality of focus positions. Acquiring the training set of digital images of the training sample may further comprise positioning the training sample, relative the microscope objective (or first microscope objective) at each focus position of the plurality of focus positions. Illuminating the training sample and capturing the digital image of the training sample may be performed for each focus position of the plurality of focus positions. At least one focus position of the plurality of focus positions may be inside the range of positions between the near limit and the far limit of the depth of field of the microscope objective.

The illumination system may comprise a plurality of light sources. Each light source of the plurality of light sources may be configured to illuminate the training sample from one direction of a plurality of directions. In other words, each light source may illuminate the training sample from a different (or unique) direction. The different illumination patterns of the plurality of illumination patterns may be formed by illuminating the training sample with at least one light source of the plurality of light sources. In other words, each illumination pattern of the plurality of illumination patterns may be formed by illuminating the sample from at least one direction of the plurality of directions. Thus, the training sample may be illuminated by a single light source of the plurality of light sources (or from a single direction of the plurality of direction). Alternatively, the training sample may be illuminated by several light sources of the plurality of light sources (or from several directions of the plurality of directions) at the same time. In such case, the directions used to form a single illumination pattern may correspond to non-overlapping portions of a Fourier space associated with the training sample. The light sources may be white light-emitting diodes, LEDs. By using white LEDs, the training set of digital images may comprise information of the training sample associated with a relatively broad range of wavelengths, especially in comparison when using narrow-band light (e.g., lasers, single-color LEDs, etc.). This may, in turn, allow the machine learning model to be trained to construct color images of the training sample (or samples).

At least one direction of the plurality of directions may correspond to an angle larger than a numerical aperture of the first microscope objective used to capture the digital images of the training set of digital images. Since the training sample may be illuminated from a plurality of different directions and a digital image may be captured for each of the plurality of directions, information regarding finer details of the training sample may be captured than what normally may be resolvable by the microscope objective used to image the training sample. This can be understood as information of different portions of Fourier space (i.e., the spatial frequency domain) associated with the training sample are captured for different illumination directions. This technique may be known in the art as Fourier ptychography. Generally in Fourier ptychography, high spatial frequencies in Fourier space associated with a sample are sampled when that sample is illuminated from a direction corresponding to a large angle of incidence. Hence, in case the sample is illuminated from a direction corresponding to an angle larger than the numerical aperture of the first microscope objective, even higher spatial frequencies of the Fourier space may be sampled. This is possible since the light is scattered by the sample, and a portion of the light scattered by the sample may be collected by the first microscope objective. This illumination technique may further allow information regarding a refractive index (or a spatial distribution of the refractive index) associated with the sample to be captured by the microscope objective used to image the sample (e.g., the first microscope objective). This can be understood as an effect of refraction of light being dependent on an angle of incident for light illuminating the sample and the refractive index of the sample. Information regarding the refractive index of the sample may, in turn, allow phase information (typically referred to as quantitative phase within the art) associated with the sample to be determined. Since the plurality of digital images comprises information associated with one or more of fine details of the sample, a refractive index associated with the sample, and phase information associated with the sample, this information may be used in the training of the machine learning model, which may, in turn, allow for a machine learning model being trained to more accurately construct the digital image depicting the focused sample than what would be allowed in case the plurality of digital images were captured from only one direction. Put differently, it may allow for a machine learning model being trained to construct the digital image depicting the focused sample more accurately than what would be allowed in case the plurality of digital images was captured from only one direction or using a conventional microscope (e.g., using bright-field illumination). It is to be understood that the information relating to one or more of finer details of the sample, refractive index associated with the sample, and phase information associated with the sample may be captured by illuminating the sample from more than one direction of the plurality of different directions at a time, for example from a subset of the plurality of directions. The subset of the plurality of directions may comprise directions corresponding to non-overlapping portions of the Fourier space of the sample. Thus, a microscope objective having a relatively lower magnification may be used while still being able to capture information related to fine details (i.e., finer than what the microscope objective normally allows using conventional microscopy illumination) of the sample. For example, by illuminating the sample from the plurality of directions, a microscope objective having a numerical aperture of 0.4 may capture information relating to fine details to the same extent that a microscope objective being used in conventional microscopy (e.g., using bright-field illumination) and having a numerical aperture of 1.25. Put differently, by illuminating the sample from the plurality of directions, a microscope objective having a magnification of 20 times may capture information relating to fine details to the same extent that a microscope objective being used in conventional microscopy (e.g., using bright-field illumination) and having a magnification of 100 times. It is to be understood that the above magnifications and numerical apertures are examples only, and the present invention may be implemented for other magnifications and/or numerical apertures as well. A suitable microscope system comprising a microscope objective and an image sensor will be described in connection with Fig. 2.

The second receiving function 1102 is configured to receive a ground truth comprising a digital image depicting the training sample being in focus. A resolution of the digital image depicting the training sample being in focus (i.e. the ground truth) may be relatively higher than a resolution of at least one digital image of the training set of digital images. For instance, as a non-limiting example, the digital image depicting the training sample in focus may be captured using a second microscope objective having a numerical aperture of 1.25 (or a magnification of 100 times). A resolution of the digital image depicting the training sample in focus (i.e. the ground truth) may be relatively higher than a resolution of each digital image of the training set of digital images. The ground truth may be information that is known to be real and/or true. In this context, since the machine learning model is trained to construct a digital image depicting a sample in focus, the ground truth may represent a "correct" representation of the training sample. For example, the ground truth may comprise a digital image of the training sample captured by means of a different imaging technique. The ground truth may be received via the transceiver 130. For example, the ground truth may be formed on a different device and/or stored on a different device and transmitted to the device 10 via the transceiver 130.

The instructing function 1106 may be further configured to transmit instructions, via the transceiver 130, to the microscope system on how to acquire the digital image of the ground truth. The ground truth may be acquired by positioning the training sample, relative to the microscope objective, at a focus position inside the range of positions between the near limit and the far limit of the depth of field of the microscope objective; illuminating the training sample with a bright-field illumination pattern; and capturing, using the microscope objective, the digital image depicting the training sample being in focus while the training sample is illuminated. Thus, the digital image of the ground truth can be captured when the training sample is positioned at a focus position inside the depth of field of the microscope objective. A numerical aperture of the second microscope objective (i.e. the microscope objective used to acquire the ground truth) may be higher than a numerical aperture of the first microscope objective (i.e. the microscope objective used to acquire the training set of digital images). Hence, a resolution of the ground truth may be relatively higher than a resolution of at least one digital image of the training set of digital images. Since the second microscope objective used to capture the digital image depicting the training sample in focus may have a relatively higher numerical aperture (and thus a larger magnification) than the first microscope objective, the digital image depicting the training sample in focus may depict a smaller area of the training sample compared to an image captured using the first microscope objective used to capture the training set of digital images. For this reason, the digital image depicting the sample in focus may be formed from a plurality of individual digital images of the sample. For example, by combining (e.g., by stitching) the plurality of individual digital images. The digital image of the training sample in focus may thereby depict an area of the training sample comparable to an area of the training sample imaged by the first microscope objective used to capture the training set of digital images. Alternatively, each digital image of the training set may be cropped such that an area of the training sample depicted in each cropped digital image of the training set may be similar and/or comparable to an area of the training sample depicted in the digital image of the training sample in focus.

The bright-field illumination pattern may be formed by illuminating the training sample simultaneously from a subset of the plurality of illumination patterns used to illuminate the training sample during acquisition of the training set of digital images. Put differently, the bright-field illumination pattern may be formed by illuminating the training sample from a subset of the plurality of directions achieved by the plurality of light sources of the illumination system, i.e. illuminated from one or more directions of the plurality of directions. Which directions, and the number of directions, of the subset may be chosen such that illumination of the training sample is similar to conventional microscopy illumination (e.g., brightfield illumination). The subset of directions may, e.g., be a majority of, or all, directions of the plurality of directions. The subset of directions may correspond to angles smaller than and equal to the numerical aperture of the microscope objective used to capture the digital image of the ground truth. The digital image depicting the training sample in focus may be captured while the training sample is illuminated simultaneously from the subset of the plurality of directions. Hence, the digital image depicting the training sample in focus may be similar to an in-focus digital image captured by a conventional microscope system using, for instance, bright-field microscopy. The training set of digital images may be acquired prior to the digital image of the ground truth. Alternatively, or additionally, the bright-field illumination pattern may be formed by illuminating the training sample using a light source suitable for conventional microscopy (i.e., bright-field microscopy).

The training function 1104 is configured to train the machine learning model to construct the digital image depicting a focused sample using the training set of digital images and the ground truth. The training function 1104 (or the training device 10) may thus be configured to perform the method 30 described in connection with Fig. 3. The machine learning model may be a convolutional neural network. The machine learning model may be a convolutional neural network suitable for digital image construction.

The training function 1104 may be configured to train the machine learning model iteratively and/or recursively until a difference between an output of the machine learning model (i.e., the constructed digital image depicting the focused sample) and the ground truth (e.g., the digital image depicting the training sample in focus) is smaller than a predetermined threshold. Hence, the training function 1104 may train the machine learning model to correlate the training set of digital images of the training sample to the ground truth (e.g., the digital image depicting the training sample in focus). A smaller difference between the output of the machine learning model and the ground truth may indicate a higher accuracy of the constructed digital image depicting the focused sample provided by the machine learning model. Hence, preferably, the difference between the output of the machine learning model and the ground truth may be minimized. A skilled person realizes that minimizing functions (e.g., the loss function) may be associated with tolerances. For example, the loss function may be regarded as being minimized even though the minimized loss function has a value which is not a local and/or global minimum.

The machine learning model may be trained using a plurality of training sets and a plurality of corresponding ground truths. Put differently, the machine learning model may be trained using a plurality of different samples. This may allow for an improved training of the machine learning model to construct the digital image depicting the focused sample. The machine learning model may be trained to construct digital images of focused samples for a plurality of different sample types. In such case, the machine learning model may, for each sample type, be trained using a training set of digital images of a training sample of the sample type, and a corresponding ground truth associated with a sample of the respective sample type (e.g., a digital image of a sample in focus of the sample type). This may allow the trained machine learning model to construct digital images depicting focused samples of different sample types. The trained machine learning model may construct digital images of focused samples that were not used during training.

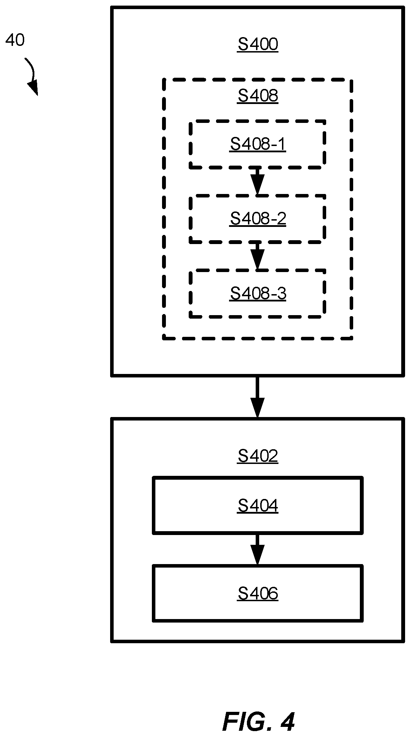

A microscope system 20 and a method 40 for constructing a digital image depicting a focused sample will now be described with reference to Fig. 2 and Fig. 4.

Figure 2 illustrates a microscope system 20. The microscope system 20 of Fig. 2 may be suitable for acquiring training sets of digital images of training samples to be used when training a machine learning model to construct a digital image depicting a focused sample as described above in connection with the device 10 of Fig. 1 or in connection with the method as described below in connection with Fig. 3. Further, the microscope system 20 of Fig. 2 may be suitable to acquire a digital image of the training sample in focus (i.e. the ground truth) used to train the machine learning model. Further, the microscope system 20 of Fig. 2 may be suitable for acquiring an input set of digital images of a sample, to be used by the machine learning model to construct a digital image of the focused sample (as will be further described below in connection with Fig. 2 and Fig. 4).

The microscope system 20 comprises an illumination system 260, an image sensor 270, a microscope objective 280, and circuitry 200. The microscope system 20 may further comprise a sample holder 290 as illustrated in the example of Fig. 2. The microscope system 20 may comprise further components, for example input devices (mouse, keyboard, touchscreen, etc.) and/or a display.

The circuitry 200 may comprise one or more of a memory 210, a processing unit 220, a transceiver 230, and a data bus 240. The processing unit 220 may comprise a central processing unit (CPU) and/or a graphical processing unit (GPU). The transceiver 230 may be configured to communicate with external devices. For example, the transceiver 230 may be configured to communicate with servers, computer external peripherals (e.g., external storage), etc. The external devices may be local devices or remote devices (e.g., a cloud server). The transceiver 230 may be configured to communicate with the external devices via an external network (e.g., a local-area network, the internet, etc.) The transceiver 230 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire. The memory 210, the processing unit 220, and the transceiver 230 may communicate via the data bus 240. The illumination system 260 and/or the image sensor 270 may be configured to communicate with the circuitry 200 via the transceiver 230 as illustrated in Fig. 2. Additionally, or alternatively, the illumination system 260 and/or the image sensor 270 may be configured to directly (e.g., via a wired connection) communicate with the data bus 240. The memory 210 may be a non-transitory computer-readable storage medium. The memory 210 may be a random-access memory. The memory 210 may be a non-volatile memory. The memory 210 may comprise one or more of a buffer, a flash memory, a hard drive, a removable media, a volatile memory, a non-volatile memory, a random-access memory (RAM), or another suitable device. In a typical arrangement, the memory may include a non-volatile memory for long term data storage and a volatile memory that functions as system memory for the microscope system 20. The memory 210 may exchange data within the circuitry 200 over the data bus 240. As is illustrated in the example of Fig. 2, the memory 210 may store program code portions 2100, 2102 corresponding to one or more functions. The program code portions 2100, 2102 may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Even though the image sensor 270 is illustrated on its own in Fig. 2, it is to be understood that the image sensor 270 may be comprised in a camera (not illustrated in Fig. 2). In the example of Fig. 2, the sample holder 290 is a microscope slide onto which a sample 292 has been applied. It is to be understood that the sample 292 may be covered by a coverslip (not illustrated in Fig. 2). The sample holder 290 may be configured to hold the sample 292 to be analyzed. The sample holder 290 may be movable (e.g., by being coupled to manual and/or motorized stages), thereby allowing the sample 292 to be moved such that different portions of the sample 292 may be imaged by the microscope objective 280.

The illumination system 260 is configured to illuminate the sample 292 with a plurality of illumination patterns. As is illustrated in Fig. 2, the illumination system 260 may comprise a plurality of light sources 261. The light sources may be configured to illuminate samples with broad spectrum light (i.e. white light). Alternatively, the illumination system may illuminate samples with narrow spectrum light (e.g. single colored light). The light sources 261 may be light emitting diodes (LEDs). The LEDs may be white LEDs or colored LEDs. White LEDs may be formed by e.g. blue LEDs covered in a layer of fluorescent material which when illuminated emits white light. The LEDs may be any type of LED, such as ordinary LED bulbs (i.e. traditional and inorganic LEDs), graphene LEDs, or LEDs typically found in displays (e.g. quantum dot LEDs (QLEDs) or organic LEDs (OLEDs)). However, other types of LED may be used as well. The illumination system 260 may, for example, comprise a plurality of lasers, and the light emitted from each laser of the plurality of lasers may be converted to light with broader spectral bandwidth. An example of such conversion process may be referred to as supercontinuum generation. The light sources may emit incoherent light, quasi-coherent light, or coherent light.

The illumination patterns of the plurality of illumination patterns may be formed by illuminating the sample 292 by one or more light sources of the plurality of light sources 261. In other words, an illumination pattern of the plurality of illumination patterns may be formed by illuminating the sample 292 with just one light source of the plurality of light sources 261. Alternatively, or in combination, an illumination pattern of the plurality of illumination patterns may be formed by illuminating the sample 292 simultaneous by a subset of the plurality of light sources 261.

Each light source of the plurality of light sources 261 may be arranged to illuminate the sample 292 from one direction of a plurality of directions 262. The illumination system 260 may be configured to simultaneously illuminate the sample 292 with one or more light sources of the plurality of light sources 261. Put differently, the illumination system 260 may be configured to simultaneously illuminate the sample 292 from one or more directions of the plurality of directions 262. At least one direction of the plurality of directions may correspond to an angle larger than a numerical aperture of the microscope objective 280.

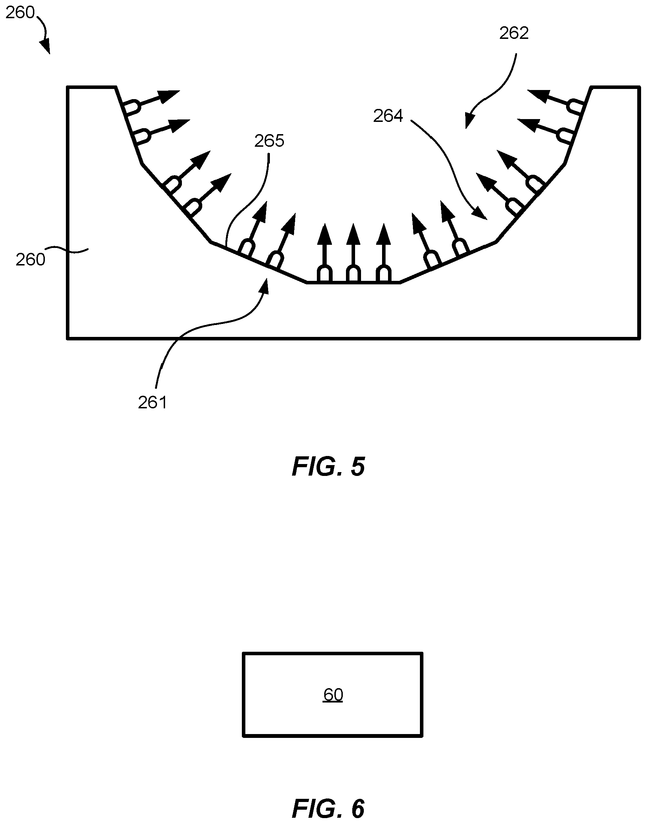

As is further illustrated in Fig. 2, the plurality of light sources 261 may be arranged on a curved surface 264. As illustrated in the example of Fig. 2, the curved surface 264 may be concave along at least one direction along the surface 264. For example, the curved surface 264 may be a cylindrical surface. The curved surface 264 may be concave along two perpendicular directions along the surface. For example, the curved surface 264 may have a shape similar to a segment of a sphere. A segment of a sphere may be a spherical cap or a spherical dome. Arranging the plurality of light sources 261 on a curved surface 264 may be advantageous in that a distance R from each light source to a current imaging position P of the microscope system 20 may be similar. Since this distance is similar, an intensity of light emitted from each light source may be similar at the current imaging position P. This may be understood as an effect of the inverse square law. Thus, the sample 292 may be illuminated by light having similar intensities for each direction in the plurality of directions 262, which may, in turn, allow for a more homogenous illumination of the sample 292 independent of illumination direction. The distance R from each light source to the current imaging position P may be in a range from 4 cm to 15 cm. It may be advantageous to configure the illumination system 260 such that the distance R from each light source to the current imaging position P is large enough such that each light source may be treated as a point source. Hence, the distance R from each light source to the current imaging position P may be larger than 15 cm, given that an intensity of light from each light source at the current imaging position is high enough to produce the sets of digital images. However, it is to be understood that the plurality of light sources 261 may be arranged on a flat surface or on a surface having an irregular shape. It is further to be understood that Fig. 2 illustrates a cross section of the microscope system 20, and in particular the illumination system 260. Hence, the curved surface 264 of the illumination system 260 illustrated in Fig. 2 may be a cylindrical surface or a portion of a spherical surface (or of a quasi-spherical surface). The curved surface 264 of the illumination system 260 may be bowl shaped. The curved surface 264 may be formed of facets 265, which is illustrated in the example of Fig. 5. Put differently, the curved surface 264 may be formed of a plurality of flat surfaces. Thus, the curved surface 264 may be piecewise flat. The curved surface 264 may be a portion of a quasi-spherical surface comprising a plurality of facets or segments. Hence, the curved surface 264 may be a portion of a surface of a polyhedron. An example of such polyhedron may be a truncated icosahedron. The plurality of light sources 261 may be arranged on the facets 265. Each light source may be arranged such that the light source is configured to emit light in a direction substantially parallel to a normal of the associated facet. It is to be understood, similar to the example illustrated in Fig. 2, that Fig. 5 illustrates a cross section of the illumination system 260. Hence, the curved surface 264 of the illumination system 260 illustrated in Fig. 5 may be a quasi-cylindrical surface or a portion of a quasi-spherical surface. The curved surface 264 of the illumination system 260 of Fig. 5 may have a shape similar to a bowl. Hence, the facets 265 of Fig. 5 are illustrated with lines, and it is to be understood that each facet 265 may be a flat surface having at least three sides. For instance, the curved surface 264 may be formed of facets having five sides and facets having six sides (e.g., similar to an inner surface of a football or soccer ball). Even though that the curved surface 264 in Fig. 5 is illustrated as a continuous surface, it is to be understood that each facet may be separate. Hence, the curved surface may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets. It is further to be understood that the number facets 265 of the illumination system 260 of Fig. 5 is an example only, and other numbers of facets 265 may be used to form the curved surface 264 of the illumination system 260. It is furthermore to be understood that the number of light sources on each facet 265 is an example only, and that number may vary.

As is illustrated in Fig. 2, the microscope objective 280 is arranged to image the sample 292 onto the image sensor 270. The microscope system 20 may comprise a plurality of microscope objectives. Hence, the microscope system 20 may comprise at least one microscope objective 280. This may allow the microscope system 20 to image the sample with different microscope objectives. For example, the microscope system 20 may comprise a first microscope objective. A numerical aperture of the first microscope objective may be 0.4 or lower. Put differently, the first microscope objective may have a magnification of 20 times or lower. Hence, a larger portion of the sample 292 may be imaged at a time compared to a microscope objective having a relatively higher numerical aperture. This may, in turn, allow for a number of individual imaging positions needed to image a majority of the sample 292 to be reduced. Thus, a time needed to image a majority of the sample 292 may thereby be reduced. This may, in particular, be advantageous in case the machine learning model is trained to construct a digital image having a relatively higher resolution than the digital images input to the machine learning model (i.e., the digital images of the input set). Hence, the sample 292 may be imaged more quickly, while the constructed digital image depicting the focused sample may have a resolution relatively higher than what the first microscope objective normally allows. The first microscope objective may be used when capturing the digital images of the sample 292. The digital images captured using the first microscope objective may be used when training the machine learning model (i.e., the training set of digital images of the sample) and/or when acquiring the input set of digital images of the sample to be input into the machine learning model trained to construct the digital image depicting the focused sample.

The microscope system 20 may further allow the relative position between the sample 292 and the microscope objective 280 to be altered in order to position the sample at different focus position. This may be achieved by moving the sample holder 290 towards and/or away from the microscope objective 290. Alternatively, or additionally, this may be achieved by moving the microscope objective towards and/or away from the sample 292.

The microscope system 20 may further comprise a second microscope objective having a magnification of, e.g., 100 times and/or a numerical aperture of 1.25. The second microscope objective may be used to acquire a digital image having a relatively higher resolution than a digital image acquired using the first microscope objective. Hence, the second microscope objective may be used to acquire digital images depicting the sample 292 in focus (i.e., the ground truth) for use when training the machine learning model. Put differently, digital images captured using the second microscope objective may be used to form the ground truth used when training the machine learning model. As described above in connection with Fig. 1, the ground truth may be acquired by capturing an image of the sample when illuminated with a bright-field illumination pattern and positioned at a focus position inside a range of positions between the near limit and the far limit of the depth of field of the microscope objective. The bright-field illumination pattern may be formed by simultaneously illuminating the sample by a subset of the plurality of light sources 261. The bright-field illumination pattern may be formed by simultaneously illuminating the sample by a majority (or all) of the plurality of light sources 261. Further, the microscope system 20 may comprise a light source (not illustrated in Fig. 2) used for conventional microscopy (i.e., bright-field microscopy). Such light source may be used to produce the bright-field illumination pattern.

It is to be understood that the numerical apertures and magnifications of the first microscope objective and/or the second microscope objective are examples only and may be chosen depending on, e.g., a type of the sample 292. For example, the numerical aperture of the first microscope objective may have a magnification of 10 times and/or a numerical aperture of 0.25. Preferably, the numerical aperture of the second microscope objective may be 2 to 3 times higher than the numerical aperture of the first microscope objective. It is to be understood that this is an example only and the numerical aperture of the second microscope objective may be higher than 2 to 3 times higher than the numerical aperture of the first microscope objective. This may be advantageous in that the machine learning model may construct digital images of the focused sample corresponding to an image of the sample taken with a numerical aperture of 2 to 3 times (or higher) what the input images are taken with. It is to be understood that the microscope system 20 may comprise further optics which may be used together with the at least one microscope objective 280 to image the sample 292 onto the image sensor 270. For example, the microscope system may, as illustrated in the example of Fig. 2, comprise at least one relay lens 285 arranged such that the sample 292 may be imaged onto the image sensor 270 by the at least one microscope objective 280 and the at least one relay lens 285. It is further to be understood that the at least one relay lens 285 may be chosen (e.g., focal length, material, size, etc.) depending on the magnification and/or the numerical aperture of the at least one microscope objective 280. Hence, each microscope objective 280 may have a corresponding relay lens of the at least one relay lens. The at least one microscope objective 280 may be movable in a longitudinal direction Z by being coupled to a manual and/or motorized stage. The longitudinal direction Z may be parallel to an optical axis of the microscope system 20. Put differently, the at least one microscope objective 280 may be movable in a focusing direction of the microscope system 20. Thus, the different focus positions of the sample 292 (or training sample) relative to the microscope objective 280 may be set by moving the microscope objective 280 along the longitudinal direction Z. Alternatively, or additionally, the sample holder 290 may be movable along the longitudinal direction Z. The position of the at least one microscope objective 280 along the longitudinal direction Z may be controlled by the circuitry 200. For example, the circuitry 200 may be configured to execute a focus function (not illustrated in Fig. 2) configured to adjust a position of the at least one microscope objective 280 along the longitudinal direction Z. The focus function may be configured to automatically adjust the position of the at least one microscope objective 280 along the longitudinal direction Z.

The circuitry 200 is configured to execute an acquisition function 2100 and an image construction function 2102.

The acquisition function 2100 is configured to acquire an input set of digital images. The acquisition function 2100 is configured to position the sample 292, relative to the microscope objective 280, at a focus position.

The acquisition function 2100 is further configured to control the illumination system 260 to illuminate the sample 292 with each illumination pattern of the plurality of illumination patterns 262.

The acquisition function 2100 is further configured to control the image sensor 270 to capture a digital image of the sample 292 for each illumination pattern of the plurality of illumination patterns 262.

As discussed previously, each light source may be configured to illuminate the sample from one direction of a plurality of directions. At least one direction of the plurality of directions may correspond to an angle larger than a numerical aperture 282 of the microscope objective 280. For example, direction 2620 in Fig. 2 may correspond to an angle larger than the numerical aperture 282 of the at least one microscope objective 280. Light entering the at least one microscope objective 280 from the direction 2620 without being scattered may not be allowed to propagate through the microscope objective 280 (i.e., the angle of incidence of light from this direction may be outside the numerical aperture 282 of the microscope objective 280) to the image sensor 270. Thus, light from this direction may need to be scattered by the sample 292 to be allowed to propagate through the microscope objective 280 to the image sensor 270.

The image construction function 2102 is configured to input the input set of digital images into a machine learning model being trained as described in connection with Fig. 1 and Fig. 3.

The image construction function 2102 is further configured to receive, from the machine learning model, an output comprising the constructed digital image depicting the focused sample. Put differently, the image construction function 2102 may be configured to construct the digital image depicting the focused sample by inputting the input set of digital images into the trained machine learning model (e.g., trained in the manner described in connection with Fig. 1 and Fig. 3), and receiving, from the trained machine learning model, an output comprising the digital image depicting the focused sample. Hence, the process of imaging the sample 292 may be more efficient, since a relatively high resolution digital image depicting the focused sample is output from the trained machine learning model using relatively low resolution digital images of the sample 292.

It is to be understood that, even though the construction of the digital image depicting a focused sample is described in connection with the microscope system of Fig. 2, the construction of the digital image may be implemented in a computing device. Hence, the computing device may be configured to receive the input set of digital images, and to input the received input set of digital images into a machine learning model trained according to the above. The machine learning model may be stored and executed on the computing device. The input set of digital images may, e.g., be captured using the microscope system of Fig. 2, and sent to the computing device (i.e., the computing device may be configured to receive the input set of digital images from the microscope system).

Figure 3 is a block scheme of a method 30 for training a machine learning model to construct a digital image 702 depicting a focused sample. In other words, the constructed digital image 702 depicts the sample in focus. The method 30 may be a computer-implemented method. Below, the different steps are described in more detail. Even though illustrated in a specific order, one or more steps of the method 30 may be performed in any suitable order, in parallel, partially in parallel, as well as multiple times.

A training set of digital images of a training sample is acquired S300. The training set of digital images of the training sample is acquired S300 by: positioning S302 the training sample, relative to a microscope objective, at a focus position outside a range of positions between a near limit and a far limit of a depth of field of the microscope objective; illuminating S304, by an illumination system, the training sample with a plurality of illumination patterns, and capturing S306, for each illumination pattern of the plurality of illumination patterns, a digital image of the training sample. The positioning S302 of the training sample may, in other words, be at a focus position being further away from an optimal focus position than the depth of field (or half of the depth of field) of the microscope objective.

A ground truth comprising a digital image depicting the training sample being in focus is received S308. In other words, the ground truth may be acquired when the training sample is positioned at a position inside the range of positions between the near limit and the far limit of the depth of field of the microscope objective used. A resolution of the digital image depicting the training sample in focus may be relatively higher than a resolution of at least one digital image of the training set of digital images.

The machine learning model is trained S310 to construct the digital image depicting a focused sample using the training set of digital images and the ground truth.

The focus position may be one of a plurality of focus positions. Acquiring S300 the training set of digital images of the training sample may then further comprise positioning S302 the training sample, relative to the microscope objective, at each focus position of the plurality of focus positions. The acts of illuminating S304 the training sample and capturing S306 a digital image of the training sample may be performed for each focus position of the plurality of focus positions. Each focus position of the plurality of focus positions may be outside the range of positions between the near limit and the far limit of the depth of field of the microscope objective (i.e. outside the depth of field). Alternatively, at least one focus position of the plurality of focus positions may be inside the range of positions between the near limit and the far limit of the depth of field of the microscope objective. In other words, at least one digital image of the training set of digital images may be captured of the training sample at a position closer to the optimal focus position than the depth of field. A majority of the focus positions of the plurality of focus positions may be outside the depth of field of the microscope objective.

The act of receiving S308 the ground truth may comprise: positioning S312 the training sample, relative to the microscope objective, at a focus position inside the range of positions between the near limit and the far limit of the depth of field of the microscope objective; illuminating S314 the training sample with a bright-field illumination pattern; and capturing S316, using the microscope objective, the digital image depicting the training sample being in focus while the training sample is illuminated. In other words, the ground truth may be acquired using conventional bright-field microscopy. The bright-field illumination pattern may be achieved by a conventional light source. Alternatively, the bright-field illumination pattern may be achieved by a majority of a plurality of light sources of the illumination system (further described below) emitting light simultaneously.

The illumination system may comprise a plurality of light sources. Each light source of the plurality of light sources may be configured to illuminate the training sample from one direction of a plurality of directions. Each illumination pattern may be formed by one or more light sources of the plurality of light sources. The illumination system may be the illumination system as described above in connection with Fig. 2 and Fig. 5.

At least one direction of the plurality of directions may correspond to an angle larger than a numerical aperture of the microscope objective used to acquire the training set of digital images.

Figure 4 is a block scheme of a method 40 for constructing a digital image 702 depicting a focused sample. In other words, the constructed digital image depicts the sample in focus. The method 40 may be a computer-implemented method. Below, the different steps are described in more detail. Even though illustrated in a specific order, one or more steps of the method 40 may be performed in any suitable order, in parallel, partially in parallel, as well as multiple times.

An input set of digital images of the sample is received S400. The input set of digital images may be acquired by positioning the sample, relative to a microscope objective, at a focus position, illuminating, by an illumination system, the sample with a plurality of illumination patterns, and capturing, for each illumination pattern of the plurality of illumination patterns, a digital image of the sample. The plurality of illumination patterns used when acquiring the input set of digital images may be the same as the plurality of illumination patterns used when acquiring the training set of digital images when training the machine learning model (i.e. the method described above in connection with Fig. 3).

A digital image depicting a focused sample is constructed S402. The digital image depicting the focused sample is constructed S402 by: inputting S404 the input set of digital images into a machine learning model being trained according to the method 30 as described above in connection with Fig. 3, and receiving S406, from the machine learning model, an output comprising the constructed digital image depicting the focused sample. The act of receiving S406 the output may comprise acquiring the output by processing the inputted set of input images by the machine learning model.

A resolution of the constructed digital image may be relatively higher than a resolution of at least one digital image of the input set of digital images. As described above, this may be achieved by using digital images of the sample illuminated by a plurality of illumination patterns.

The act of receiving S400 the input set of digital images of the sample may comprise: acquiring S408 the input set of digital images of the sample by: positioning S408-1 the sample, relative to a microscope objective, at a focus position being outside a depth of field of the microscope objective, illuminating S408-2, by an illumination system, the sample with a plurality of illumination patterns, and capturing S408-3, for each illumination pattern of the plurality of illumination patterns, a digital image of the sample.

The illumination system may comprise a plurality of light sources. Each light source of the plurality of light sources may be configured to illuminate the sample from one direction of a plurality of directions. Each illumination pattern of the plurality of illumination patterns may be formed by one or more light sources of the plurality of light sources.

At least one direction of the plurality of directions may correspond to an angle larger than a numerical aperture of the microscope objective used to acquire the input set of digital images.

Figure 6 illustrates a non-transitory computer-readable storage medium 60. The non-transitory computer-readable storage medium 60 comprises program code portions which, when executed on a device having processing capabilities, performs the method 40 as described in connection with Fig. 4.

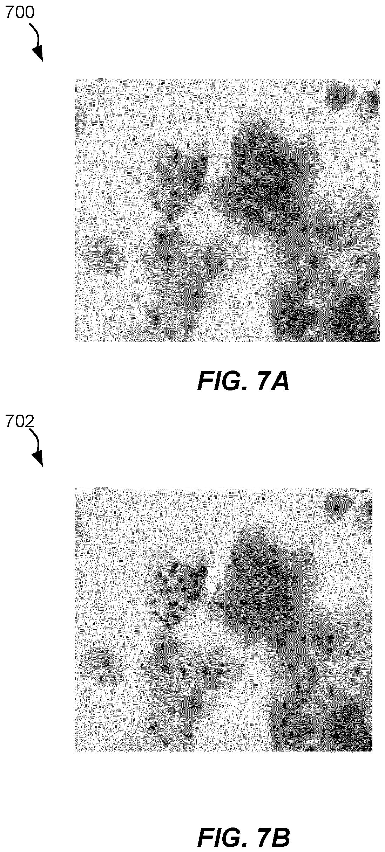

Figure 7A and fig. 7B illustrate two different digital images of a sample. In this example, the sample is a pathology sample.

Fig. 7A illustrates a digital image 700 of the sample captured using a microscope objective having a magnification of 10 times. As is seen in Fig. 7A, the digital image 700 is captured out of focus. In particular, the digital image 700 is captured at a distance of 15 microns away from an optimal focus position. The out-of-focus digital image 700 as illustrated herein may represent a digital image of the training sample captured under the same circumstances (except the illumination patterns) as the training set of digital images used to train the machine learning model as described above. The out-of-focus digital image 700 of the sample as illustrated herein may also represent a digital image of a sample captured under the same circumstances (except the illumination patterns) as the input set of digital images input into the trained machine learning model to construct a digital image depicting the sample in focus.

Fig. 7B illustrates a digital image 702 of the same sample as in Fig. 7A but constructed by the machine learning model from digital images captured under similar conditions as the digital image 700 illustrated in Fig. 7A. In other words, the digital image 702 is an example of an output from the machine learning model trained to construct a digital image depicting the sample in focus. Comparing the constructed digital image 702 to the digital image 700 of Fig. 7A, it is clear that the constructed digital image 702 is in better focus, which facilitates an improved analysis of the depicted sample. Thus, the machine learning model may construct the digital image 702 of Fig. 7B being in focus, while using digital images similar to the digital image 700 of Fig. 7A.

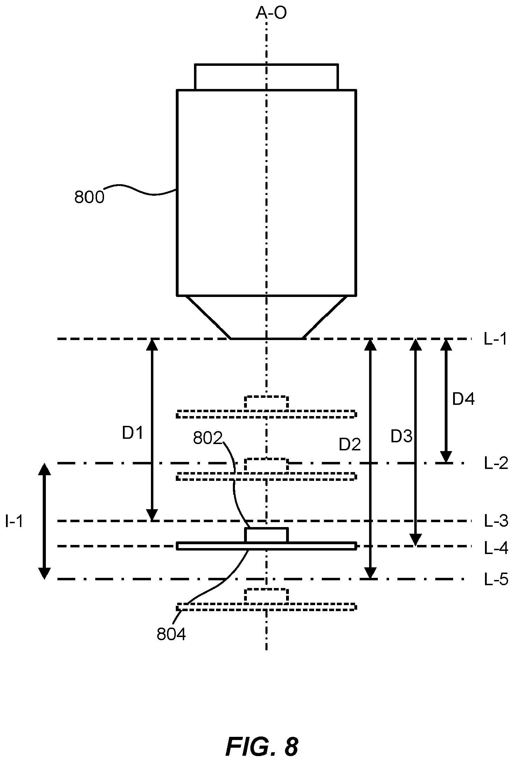

Figure 8 illustrates, by way of example, how the focus positions relate to the depth of field and the near and far limit of the depth of field of a microscope objective 800. Illustrated herein, is a sample 802, placed on a sample holder 804. The sample 802 is placed as a focus position relative to the microscope objective 800 indicated by line L-4. The position of the sample 802 may be defined as a central plane of the sample holder 804 as illustrated herein. Alternatively, the position of the sample 802 may be defined as a plane of the sample, such as a top surface, a bottom surface or a central plane of the sample. The position of the sample may be defined along an optical axis A-O of the microscope objective 800. Thus, the focus position of the sample relative to the microscope objective 800 may be adjusted by moving the sample holder 804 and/or the microscope objective 800 along the optical axis such that a distance D3 between a microscope objective (indicated by the L-1) and the sample 802 becomes larger or smaller. The position L-1 of the microscope objective may be defined as a surface of the microscope objective 800 (i.e. the surface closest to the sample 802) facing the sample 802. The skilled person would be aware of other suitable ways in which the position of the microscope objective 800 may be defined.

The depth of field (indicated by the interval 1-1) of the microscope objective 800 is defined a distance between a farthest and a nearest point which are in acceptable focus. Put differently, this can be identified as the zone or interval of acceptable sharpness of images produced by the microscope objective 800. Thus, the depth of field 1-1 may be defined by a range of positions between a near limit (indicated by line L-2) and a far limit (indicated by line L-5). The near limit L-2 may be considered as the smallest distance D4 between the microscope objective 800 and a position at which an imaged object is considered to be acceptably sharp. Correspondingly, the far limit L-5 can be considered as the largest distance D2 between the microscope objective 800 and a position at which the imaged object is considered to be acceptably sharp.

In the between these two positions (i.e., between the near limit L-2 and the far limit L-5), an optimal focus position (indicated by line L-3) can be defined. Objects imaged at a distance D3 from the microscope objective (i.e. at the optimal focus position L-3) may be in the best possible focus.

In the illustrated example, the focus position L-4 at which the sample 802 is positioned is within the depth of field 1-1 of the microscope objective 800. A digital image captured of the sample 802 at this position may represent a ground truth. However, as described above, a training set of digital images or an input set of digital images of the sample 802 may be captured at one or more focus positions, outside and/or inside the depth of field 1-1 of the microscope objective 800 as illustrated by the sample and sample holders in broken lines.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinlR. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). Different types of loss functions may be used to evaluate the predicted output, i.e. how well is compares to the ground truth. The machine learning model may be trained to reduce (or increase, depending on the loss function) a value of the loss function. Put differently, training the machine learning model may be seen as minimizing (or maximizing) the loss function. The loss function may be a pixel-wise loss function, i.e. a loss function which compares the output and ground truth pixel by pixel. Alternatively, the loss function may be a non-pixel-wise loss function, i.e. a loss function which looks at the images as a whole.

The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is to be understood that the machine learning model may take further input during training. An example of such input may be what type of sample is to be imaged. Such input may then be used when constructing a digital image depicting the sample in focus using the trained machine learning model. Further, in this context, the output is a digital image. Thus, the output of the machine learning model may be a matrix representing the constructed digital image depicting the focused sample.

The person skilled in the art realizes that the present inventive concept by no means is limited to the preferred variants described above. On the contrary, many modifications and variations are possible within the scope of the appended claims.

Additionally, variations to the disclosed variants can be understood and effected by the skilled person in practicing the claimed invention, from a study of the drawings, the disclosure, and the appended claims.

## Claims

1. A method (30) for training a machine learning model to construct a digital image depicting a focused sample, the method (30) comprising:
acquiring (S300) a training set of digital images of a training sample by:
positioning (S302) the training sample, relative to a microscope objective, at a focus position outside a range of positions between a near limit and a far limit of a depth of field of the microscope objective;
illuminating (S304), by an illumination system, the training sample with a plurality of illumination patterns, and
capturing (S306), for each illumination pattern of the plurality of illumination patterns, a digital image of the training sample;
receiving (S308) a ground truth comprising a digital image depicting the training sample being in focus; and
training (S310) the machine learning model to construct the digital image depicting a focused sample using the training set of digital images and the ground truth.

2. The method (30) according to claim 1, wherein a resolution of the digital image depicting the training sample being in focus is relatively higher than a resolution of at least one digital image of the training set of digital images.

3. The method (30) according to claim 1 or 2, wherein said focus position is one of a plurality of focus positions, and wherein acquiring (S300) the training set of digital images of the training sample further comprises:
positioning (S302) the training sample, relative to the microscope objective, at each focus position of the plurality of focus positions, and
wherein the acts of illuminating (S304) the training sample and capturing (S306) a digital image of the training sample are performed for each focus position of the plurality of focus positions.

4. The method (30) according to claim 3, wherein at least one focus position of the plurality of focus positions is inside the range of positions between the near limit and the far limit of the depth of field of the microscope objective.

5. The method (30) according to any of the claims 1 to 4, wherein the act of receiving (S308) the ground truth comprises:
positioning (S312) the training sample, relative to the microscope objective, at a focus position inside the range of positions between the near limit and the far limit of the depth of field of the microscope objective;
illuminating (S314) the training sample with a bright-field illumination pattern; and
capturing (S316), using the microscope objective, the digital image depicting the training sample being in focus while the training sample is illuminated with the bright-field illumination pattern.

6. The method (30) according to any of the claims 1 to 5, wherein the illumination system comprises a plurality of light sources, each light source of the plurality of light sources being configured to illuminate the training sample from one direction of a plurality of directions, and wherein each illumination pattern of the plurality of illumination patterns is formed by one or more light sources of the plurality of light sources.

7. The method (30) according to claim 6, wherein at least one direction of the plurality of directions corresponds to an angle larger than a numerical aperture of the microscope objective used to acquire the training set of digital images.

8. A method (40) for constructing a digital image depicting a focused sample, the method (40) comprising:
receiving (S400) an input set of digital images of a sample, wherein the input set of digital images is acquired by: positioning the sample, relative to a microscope objective, at a focus position, illuminating, by an illumination system, the sample with a plurality of illumination patterns, and capturing, for each illumination pattern of the plurality of illumination patterns, a digital image of the sample;
constructing (S402) a digital image depicting a focused sample by:
inputting (S404) the input set of digital images into a machine learning model being trained according to the method (30) of any one of claims 1-7, and
receiving (S406), from the machine learning model, an output comprising the constructed digital image depicting the focused sample.

9. The method (40) according to claim 8, wherein the illumination system comprises a plurality of light sources, each light source of the plurality of light sources being configured to illuminate the sample from one direction of a plurality of directions, and wherein each illumination pattern of the plurality of illumination patterns is formed by one or more light sources of the plurality of light sources.

10. The method (40) according to claim 9, wherein at least one direction of the plurality of directions corresponds to an angle larger than a numerical aperture of the microscope objective used to acquire the input set of digital images.

11. A device (10) for training a machine learning model to construct a digital image depicting a focused sample, the device (10) comprising circuitry (100) configured to execute:
a first receiving function (1100) configured to receive a training set of digital images of a training sample, wherein the training set of digital images of the training sample is acquired by: positioning the training sample, relative to a microscope objective, at a focus position outside a range of positions between a near limit and a far limit of a depth of field of the microscope objective, illuminating, by an illumination system, the training sample with a plurality of illumination patterns, and capturing, for each illumination pattern of the plurality of illumination patterns, a digital image of the training sample;
wherein the circuitry is further configured to execute:
a second receiving function (1102) configured to receive a ground truth comprising a digital image depicting the training sample being in focus; and
a training function (1104) configured to train the machine learning model to construct the digital image depicting a focused sample using the training set of digital images and the ground truth.

12. A microscope system (20) comprising:
an illumination system (260) configured to illuminate a sample (292) with a plurality of illumination patterns (262);
an image sensor (270) configured to capture digital images of the sample (292);
a microscope objective (280) configured to image the sample (292) onto the image sensor (270); and
circuitry (200) configured to execute:
an acquisition function (2100) configured to acquire an input set of digital images by being configured to:
position the sample (292), relative to the microscope objective (280), at a focus position,
control the illumination system (260) to illuminate the sample (292) with each illumination pattern of the plurality of illumination patterns (262), and
control the image sensor (270) to capture a digital image of the sample (292) for each illumination pattern of the plurality
of illumination patterns (262), and
wherein the circuitry (200) is further configured to execute:
an image construction function (2102) configured to:
input the input set of digital images into a machine learning model being trained according to the method (30) of any one of claims 1-7, and
receive, from the machine learning model, an output comprising the constructed digital image depicting the focused sample.

13. The microscope system (20) according to claim 12, wherein the illumination system (260) comprises a plurality of light sources (261), each light source of the plurality of light sources (261) being configured to illuminate the sample (292) from one direction of a plurality of directions, and wherein each illumination pattern of the plurality of illumination patterns (262) is formed by one or more light sources of the plurality of light sources (261).

14. The microscope system (20) according to claim 13, wherein at least one direction of the plurality of directions corresponds to an angle larger than a numerical aperture of the microscope objective (280) used to image the sample (292).

15. The microscope system (20) according to claim 13 or 14, wherein the plurality of light sources (261) is arranged on a curved surface (264) being concave along at least one direction along the surface.

16. A non-transitory computer-readable storage medium comprising program code portions which, when executed on a device having processing capabilities, performs the method (40) according to any one of claims 8-10.
